# EUROPEAN PATENT SPECIFICATION

(11) **EP 3 100 500 B1**
(45) Date of publication and mention of the grant of the patent: **05.12.2018**
(21) Application number: 15743392.1
(22) Date of filing: 29.01.2015
(51) Int. Cl.: H04W 24/10, H04W 4/06, H04W 48/12, H04W 24/04

(54) **METHOD AND APPARATUS FOR TRANSMITTING REPORT MESSAGE IN WIRELESS COMMUNICATION SYSTEM**
VERFAHREN UND VORRICHTUNG ZUR ÜBERTRAGUNG EINER BENACHRICHTIGUNG IN EINEM DRAHTLOSKOMMUNIKATIONSSYSTEM
PROCÉDÉ ET APPAREIL DE TRANSMISSION DE MESSAGE DE COMPTE-RENDU DANS UN SYSTÈME DE COMMUNICATIONS SANS FIL

(30) Priority: 29.01.2014 US 201461932799 P
(43) Date of publication of application: 07.12.2016
(73) Proprietor: LG Electronics Inc., Seoul 150-721 (KR)
(72) Inventor: LEE, Youngdae, Seoul 137-893 (KR); JUNG, Sunghoon, Seoul 137-893 (KR); KIM, Sangwon, Seoul 137-893 (KR)
(74) Representative: Frenkel, Matthias Alexander
(86) International application number: PCT/KR2015/000958
(87) International publication number: WO 2015/115825

(56) References cited:
- WO-A2-2012/098129
- WO-A2-2012/138083
- WO-A2-2012/148202
- US-A1- 2013 010 624
- US-A1- 2013 010 624
- US-A1- 2013 128 756
- US-A1- 2013 184 026
- HUAWEI ET AL: "Discussion on UE measurements for MBMS", 3GPP DRAFT; R1-134351, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717493, Retrieved from the Internet: URL:http://www.3gpp.org/ftp/tsg_ran/WG1_RL 1/TSGR1_74b/Docs/ [retrieved on 2013-09-28]
- ERICSSON: "On radio measurements for further MBMS support", 3GPP DRAFT; R1-135667, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 2 November 2013 (2013-11-02), XP050751127, Retrieved from the Internet: URL:http://www.3gpp.org/ftp/tsg_ran/WG1_RL 1/TSGR1_75/Docs/ [retrieved on 2013-11-02]
- KYOCERA: "Configuration of MDT for further MBMS operations", 3GPP DRAFT; R2-140680_MBMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague; 20140210 - 20140214 9 February 2014 (2014-02-09), XP050791982, Retrieved from the Internet: URL:http://www.3gpp.org/ftp/Meetings_3GPP_ SYNC/RAN2/Docs/ [retrieved on 2014-02-09]
- LG ELECTRONICS INC: "Repetition of MBMS MDT configuration message via BCCH or MCCH", 3GPP DRAFT; R2-141458 REPETITION OF MBMS MDT CONFIGURATION MESSAGE VIA BCCH OR MCCH, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. Valencia, Spain; 20140331 - 20140404 22 March 2014 (2014-03-22), XP050817852, Retrieved from the Internet: URL:http://www.3gpp.org/ftp/tsg_ran/WG2_RL 2/TSGR2_85bis/Docs/ [retrieved on 2014-03-22]

## Description

### Technical Field

The present invention relates to wireless communications, and more particularly, to a method and apparatus for transmitting a report message in a wireless communication system.

### Background Art

Universal mobile telecommunications system (UMTS) is a 3rd generation (3G) asynchronous mobile communication system operating in wideband code division multiple access (WCDMA) based on European systems, global system for mobile communications (GSM) and general packet radio services (GPRS). A long-term evolution (LTE) of UMTS is under discussion by the 3rd generation partnership project (3GPP) that standardized UMTS.

The 3GPP LTE is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

The 3GPP LTE can provide a multimedia broadcast multicast service (MBMS) service. The MBMS is a service which simultaneously transmits data packets to multiple users. If a specific level of users exists in the same cell, the respective users can be allowed to share necessary resources so that the plurality of users can receive the same multimedia data, thereby increasing resource efficiency. In addition, a multimedia service can be used with a low cost from the perspective of users.

Minimization of drive tests (MDT) is a feature introduced in 3GPP LTE rel-10 to allow the harvesting of network coverage and quality information from customer user equipments (UEs) as they move within the coverage of the radio access network (RAN). This provides better quality data, at a lower cost, than that produced by the RAN operator performing drive testing of the RAN using test UEs.

MBMS related problems may occur according to situations. A method for reporting the MBMS related problem as quick as possible may be required.

US 2013/0128756 A1 describes a user equipment (UE) that receives a reporting requirement for one or more Multicast-Broadcast Single Frequency Network (MBSFN) physical layer parameters, obtains the one or more MBSFN physical layer parameters including at least one parameter corresponding to a reference signal, and creates a report based on the obtained one or more MBSFN physical layer parameters. The UE obtains the one or more MBSFN physical layer parameters using user-plane or control-plane based mechanisms. The user-plane mechanism is described to involve the use of a modified version of the reporting mechanism for Quality of Experience (QoE) metrics. The control-plane mechanism is described to involve the use of a modified version of the reporting mechanism for the Minimization of Drive Tests (MDT) metrics.

US 2013/010624 A1 outlines a method and system for measuring and reporting a multimedia broadcast multicast service (MBMS), for solving a technical problem of how to measure and report a measurement result reflecting MBMS performance by a UE. In the document, the UE is described to measure the MBMS according to a measurement configuration, and when a measurement reporting norm is met, the UE reports a measurement result or a measurement log of the measured MBMS measurement quantity to a network side.

### SUMMARY OF THE INVENTION

The present invention provides a method and apparatus for transmitting a report message in a wireless communication system. The present invention provides a method for transmitting an immediate minimization of drive tests (MDT) report, upon detecting a multimedia broadcast multicast service (MBMS) related problem.

In an aspect, a method for transmitting, by a user equipment (UE), a report message in a wireless communication system is provided as defined in independent claim 1.

In another aspect, a user equipment (UE) configured to transmit a report message in a wireless communication system is provided as defined in independent claim 14.

The embodiments and/or examples of the following description which are not covered by the appended claims are considered as not being part of the present invention.

### Advantageous Effects of Invention

MBMS related problem can be immediately reported.

### Brief Description of Drawings

FIG. 1 shows LTE system architecture.
FIG. 2 shows a block diagram of architecture of a typical E-UTRAN and a typical EPC.
FIG. 3 shows a block diagram of a user plane protocol stack of an LTE system.
FIG. 4 shows a block diagram of a control plane protocol stack of an LTE system.
FIG. 5 shows an example of a physical channel structure.
FIG. 6 shows a MDT measurement configuration procedure.
FIG. 7 shows MBMS definitions.
FIG. 8 shows change of MCCH information.
FIG. 9 shows a MCCH information acquisition procedure.
FIG. 10 shows an MBMS interest indication procedure.
FIG. 11 shows an example of a method for transmitting a report message according to an embodiment of the present invention.
FIG. 12 shows a wireless communication system to implement an embodiment of the present invention.

### Mode for the Invention

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802-20, evolved UTRA (E-UTRA), etc. IEEE 802.16m is an evolution of IEEE 802.16e, and provides backward compatibility with an IEEE 802.16-based system. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in downlink and uses the SC-FDMA in uplink. LTE-advance (LTE-A) is an evolution of the 3GPP LTE.

For clarity, the following description will focus on the LTE-A. However, technical features of the present invention are not limited thereto.

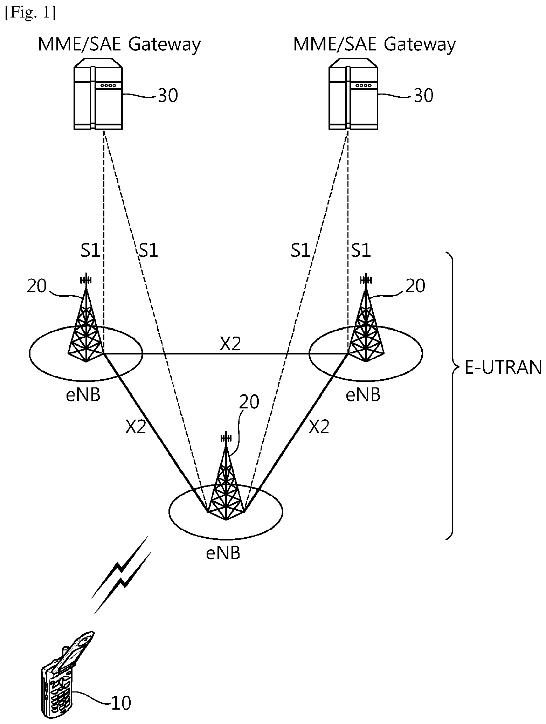

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), an access point, etc. One eNB 20 may be deployed per cell.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) and a system architecture evolution (SAE) gateway (S-GW). The MME/S-GW 30 may be positioned at the end of the network and connected to an external network. For clarity, MME/S-GW 30 will be referred to herein simply as a "gateway," but it is understood that this entity includes both the MME and S-GW.

The MME provides various functions including non-access stratum (NAS) signaling to eNBs 20, NAS signaling security, access stratum (AS) security control, inter core network (CN) node signaling for mobility between 3GPP access networks, idle mode UE reachability (including control and execution of paging retransmission), tracking area list management (for UE in idle and active mode), packet data network (PDN) gateway (P-GW) and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on access point name aggregate maximum bit rate (APN-AMBR).

Interfaces for transmitting user traffic or control traffic may be used. The UE 10 is connected to the eNB 20 via a Uu interface. The eNBs 20 are connected to each other via an X2 interface. Neighboring eNBs may have a meshed network structure that has the X2 interface. A plurality of nodes may be connected between the eNB 20 and the gateway 30 via an S1 interface.

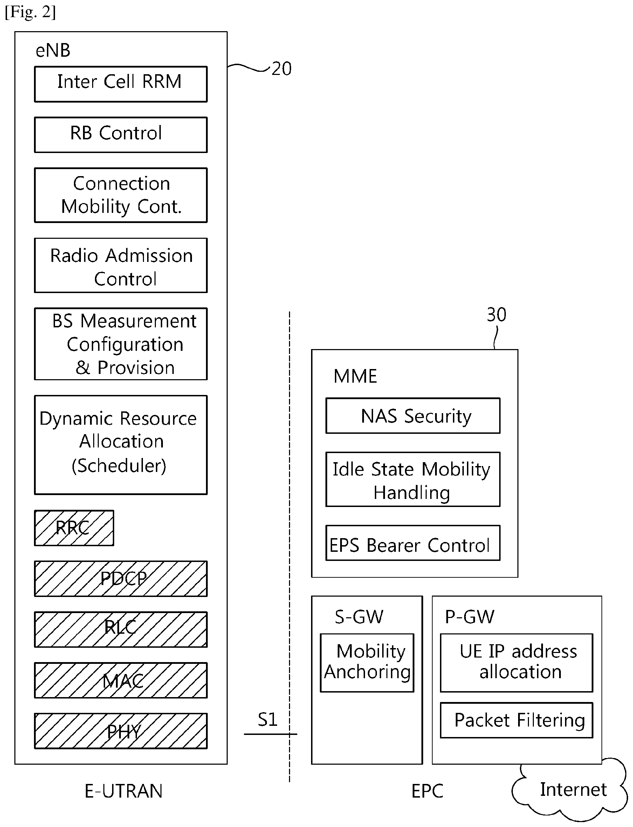

FIG. 2 shows a block diagram of architecture of a typical E-UTRAN and a typical EPC. Referring to FIG. 2, the eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

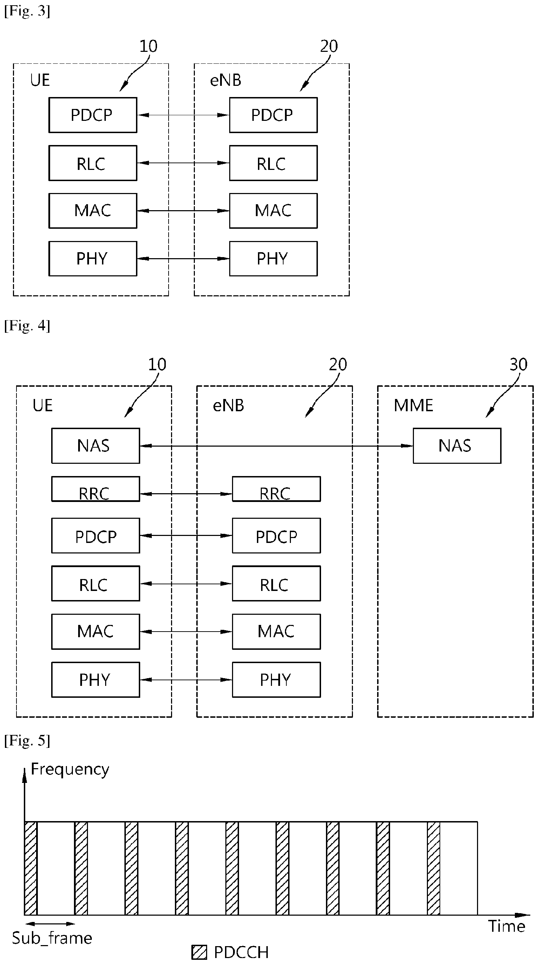

FIG. 3 shows a block diagram of a user plane protocol stack of an LTE system. FIG. 4 shows a block diagram of a control plane protocol stack of an LTE system. Layers of a radio interface protocol between the UE and the E-UTRAN may be classified into a first layer (L1), a second layer (L2), and a third layer (L3) based on the lower three layers of the open system interconnection (OSI) model that is well-known in the communication system.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data between the MAC layer and the PHY layer is transferred through the transport channel. Between different PHY layers, i.e. between a PHY layer of a transmission side and a PHY layer of a reception side, data is transferred via the physical channel.

A MAC layer, a radio link control (RLC) layer, and a packet data convergence protocol (PDCP) layer belong to the L2. The MAC layer provides services to the RLC layer, which is a higher layer of the MAC layer, via a logical channel. The MAC layer provides data transfer services on logical channels. The RLC layer supports the transmission of data with reliability. Meanwhile, a function of the RLC layer may be implemented with a functional block inside the MAC layer. In this case, the RLC layer may not exist. The PDCP layer provides a function of header compression function that reduces unnecessary control information such that data being transmitted by employing IP packets, such as IPv4 or IPv6, can be efficiently transmitted over a radio interface that has a relatively small bandwidth.

A radio resource control (RRC) layer belongs to the L3. The RLC layer is located at the lowest portion of the L3, and is only defined in the control plane. The RRC layer controls logical channels, transport channels, and physical channels in relation to the configuration, reconfiguration, and release of radio bearers (RBs). The RB signifies a service provided the L2 for data transmission between the UE and E-UTRAN.

Referring to FIG. 3, the RLC and MAC layers (terminated in the eNB on the network side) may perform functions such as scheduling, automatic repeat request (ARQ), and hybrid ARQ (HARQ). The PDCP layer (terminated in the eNB on the network side) may perform the user plane functions such as header compression, integrity protection, and ciphering.

Referring to FIG. 4, the RLC and MAC layers (terminated in the eNB on the network side) may perform the same functions for the control plane. The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

FIG. 5 shows an example of a physical channel structure. A physical channel transfers signaling and data between PHY layer of the UE and eNB with a radio resource. A physical channel consists of a plurality of subframes in time domain and a plurality of subcarriers in frequency domain. One subframe, which is 1 ms, consists of a plurality of symbols in the time domain. Specific symbol(s) of the subframe, such as the first symbol of the subframe, may be used for a physical downlink control channel (PDCCH). The PDCCH carries dynamic allocated resources, such as a physical resource block (PRB) and modulation and coding scheme (MCS).

A DL transport channel includes a broadcast channel (BCH) used for transmitting system information, a paging channel (PCH) used for paging a UE, a downlink shared channel (DL-SCH) used for transmitting user traffic or control signals, a multicast channel (MCH) used for multicast or broadcast service transmission. The DL-SCH supports HARQ, dynamic link adaptation by varying the modulation, coding and transmit power, and both dynamic and semi-static resource allocation. The DL-SCH also may enable broadcast in the entire cell and the use of beamforming.

A UL transport channel includes a random access channel (RACH) normally used for initial access to a cell, a uplink shared channel (UL-SCH) for transmitting user traffic or control signals, etc. The UL-SCH supports HARQ and dynamic link adaptation by varying the transmit power and potentially modulation and coding. The UL-SCH also may enable the use of beamforming.

The logical channels are classified into control channels for transferring control plane information and traffic channels for transferring user plane information, according to a type of transmitted information. That is, a set of logical channel types is defined for different data transfer services offered by the MAC layer.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting multimedia broadcast multicast services (MBMS) control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RRC state indicates whether an RRC layer of the UE is logically connected to an RRC layer of the E-UTRAN. The RRC state may be divided into two different states such as an RRC idle state (RRC_IDLE) and an RRC connected state (RRC_CONNECTED). In RRC_IDLE, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell re-selection. Also, in RRC_IDLE, no RRC context is stored in the eNB.

In RRC_CONNECTED, the UE has an E-UTRAN RRC connection and a context in the E-UTRAN, such that transmitting and/or receiving data to/from the eNB becomes possible. Also, the UE can report channel quality information and feedback information to the eNB. In RRC_CONNECTED, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion. A paging message is transmitted over all cells belonging to the same tracking area. If the UE moves from one tracking area (TA) to another TA, the UE will send a tracking area update (TAU) message to the network to update its location.

Minimization of drive tests (MDT) is described. In may be referred to 3GPP TS 37.320 V1 1.3.0 (2013-03). The general principles and requirements guiding the definition of functions for MDT are the following.
1. MDT mode: There are two modes for the MDT measurements, which are logged MDT and immediate MDT. The logged MDT is MDT functionality involving measurement logging by the UE in IDLE mode, CELL_PCH and URA_PCH states (when the UE is in UTRA) for reporting to eNB/radio network controller (RNC) at a later point in time. The immediate MDT is MDT functionality involving measurements performed by the UE in CONNECTED state and reporting of the measurements to eNB/RNC available at the time of reporting condition as well as measurements by the network for MDT purposes. There are also cases of measurement collection not specified as either immediate or logged MDT, such as accessibility measurements.
2. UE measurement configuration: It is possible to configure MDT measurements for the UE logging purpose independently from the network configurations for normal radio resource management (RRM) purposes. However, in most cases, the availability of measurement results is conditionally dependent on the UE RRM configuration.
3. UE measurement collection and reporting: UE MDT measurement logs consist of multiple events and measurements taken over time. The time interval for measurement collection and reporting is decoupled in order to limit the impact on the UE battery consumption and network signaling load.
4. Geographical scope of measurement logging: It is possible to configure the geographical area where the defined set of measurements shall be collected.
5. Location information: The measurements shall be linked to available location information and/or other information or measurements that can be used to derive location information.
6. Time information: The measurements in measurement logs shall be linked to a time stamp.
7. UE capability information: The network may use UE capabilities to select terminals for MDT measurements.
8. Dependency on self-optimizing network (SON): The solutions for MDT are able to work independently from SON support in the network. Relation between measurements/solution for MDT and UE side SON functions shall be established in a way that re-use of functions is achieved where possible.
9. Dependency on TRACE: The subscriber/cell trace functionality is reused and extended to support MDT. If the MDT is initiated toward to a specific UE (e.g., based on international mobile subscriber identity (IMSI), international mobile station equipment identity (IMEI) software version (SV), etc.), the signalling based trace procedure is used, otherwise the management based trace procedure (or cell traffic trace procedure) is used.

The solutions for MDT shall take into account the following constraints:
1. UE measurements: The UE measurement logging mechanism is an optional feature. In order to limit the impact on UE power consumption and processing, the UE measurement logging should as much as possible rely on the measurements that are available in the UE according to radio resource management enforced by the access network.
2. Location information: The availability of location information is subject to UE capability and/or UE implementation. Solutions requiring location information shall take into account power consumption of the UE due to the need to run its positioning components.

Logged MDT procedures are described. Support of logged MDT complies with the principles for idle mode measurements in the UE. Furthermore, measurement logging is differentiated based on UE states in idle mode, i.e. camped normally, any cell selection or camped on any cell. The UE shall perform measurement logging in "camped normally" state. In "any cell selection" and "camped on any cell" state the UE is not required to perform MDT measurement logging (including time and location information). For logged MDT, the configuration, measurement collection and reporting of the concerning measurement will always be done in cells of the same RAT type.

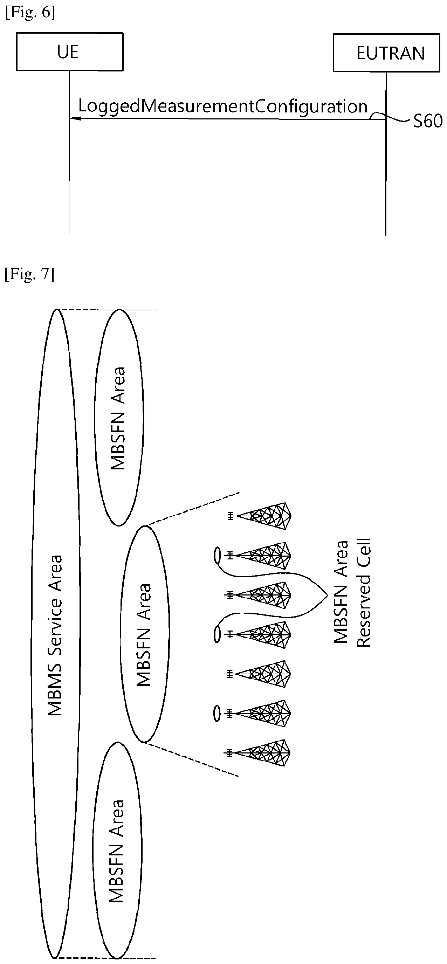

FIG. 6 shows a MDT measurement configuration procedure. Logged MDT measurements are configured with a MDT measurement configuration procedure. In step S60, the network initiates the MDT measurement configuration procedure to the UE in RRC_CONNECTED by sending the *Logged Measurement Configuration* message, which is used to transfer configuration parameters for logged MDT. This is a unidirectional RRC signaling procedure. A release operation for logged measurement configuration in the UE is realized only by configuration replacement when the configuration is overwritten or by configuration clearance in case a duration timer stopping or expiration condition is met.

The logged measurement configuration consists of followings:
- Configuration of the triggering of logging events. Only periodic downlink pilot strength measurement trigger is supported, for which the logging interval is configurable. The parameter specifies the periodicity for storing MDT measurement results. It should be configured in seconds in multiples of the applied IDLE mode discontinuous reception (DRX), i.e. multiples of 1.28s which is either a factor or multiple of the IDLE mode DRX. The UE behaviour is unspecified when the UE is configured with a DRX cycle larger than the logging interval.
- Configuration of the logging duration. This configuration parameter defines a timer activated at the moment of configuration that continues independent of state changes, RAT or registered PLMN (RPLMN) change. When the timer expires the logging is stopped and the configuration is cleared (except for the parameters that are required for further reporting, e.g., network absolute time stamp, trace reference, trace recording session reference and trace collection entity (TCE) identity (Id))
- Network absolute time stamp to be used as a time reference to UE
- Trace reference parameter as indicated by the operations, administration and management (OAM) configuration
- Trace recording session reference as indicated by the OAM configuration
- TCE Id as indicated by the OAM configuration
- MDT PLMN List, indicating the PLMNs where measurement collection and log reporting is allowed. It is a subset of the equivalent PLMN (EPLMN) list and the RPLMN at logged measurement configuration.
- (optionally) Configuration of a logging area. A UE will log measurements as long as it is within the configured logging area.
- The configured logging area can span PLMNs in the MDT PLMN List. If no area is configured, the UE will log measurements throughout the PLMNs of the MDT PLMN list.

The logged measurement configuration is provided in a cell by dedicated control while the UE is in RRC_CONNECTED and implies:
- logged measurement configuration is active in IDLE UE state in E-UTRAN, or in IDLE mode, CELL_PCH and URA_PCH states in UTRAN until logging duration timer expires or stops
- logged measurement configuration and logs are maintained when the UE is in any state as described above, despite multiple periods interrupted by UE state transitions, i.e. when the UE is in CONNECTED state for E-UTRAN and CELL_DCH, CELL_FACH state in UTRAN
- logged measurement configuration and logs are maintained when the UE is in any state as described above in that RAT, despite multiple periods interrupted by UE presence in another RAT

There is only one RAT-specific logged measurement configuration for logged MDT in the UE. When the network provides a configuration, any previously configured logged measurement configuration will be entirely replaced by the new one. Moreover, logged measurements corresponding to the previous configuration will be cleared at the same time. It is left up to the network to retrieve any relevant data before providing a new configuration.

When a logging area is configured, logged MDT measurements are performed as long as the UE is within this logging area. If no logging area is configured, logged MDT measurements are performed as long as the RPLMN is part of the MDT PLMN list. When the UE is not in the logging area or RPLMN is not part of the MDT PLMN list, the logging is suspended, i.e. the logged measurement configuration and the log are kept but measurement results are not logged.

In case the new PLMN that does not belong to the MDT PLMN list provides a logged measurement configuration any previously configured logged measurement configuration and corresponding log are cleared and overwritten without being retrieved.

In "camp normally" state, a UE shall perform logging as per the logged measurement configuration. This state includes a period between cell selection criteria not being met and UE entering "any cell selection" state, i.e. 10s for E-UTRA or 12s for UTRA. In "any cell selection" or "camped on any cell" state, the periodic logging stops. However, it should be noted that the duration timer is kept running. When the UE reenters "camped normally" state and the duration timer has not expired, the periodic logging is restarted based on new DRX and logging resumes automatically (with a leap in time stamp).

The measurement quantity is fixed for logged MDT (i.e. not configurable) and consists of both reference signal received power (RSRP) and reference signal received quality (RSRQ) for E-UTRA, both received signal code power (RSCP) and Ec/No for UTRA, primary common control physical channel (P-CCPCH) RSCP for UTRA 1.28 time division duplex (TDD), Rxlev for GERAN, and Pilot Pn phase and pilot strength for CDMA2000 if the serving cell is E-UTRAN cell.

The UE collects MDT measurements and continues logging according to the logged measurement configuration until the UE memory reserved for MDT is full. In this case, the UE stops logging, stops the log duration timer and starts the 48 hour timer.

A UE configured to perform Logged MDT measurements indicates the availability of logged MDT measurements, by means of an indicator, in the *RRCConnectionSetup-Complete* message during connection establishment. Furthermore, the indicator (possibly updated) shall be provided within E-UTRAN handover and re-establishment, and UTRAN procedures involving the change of serving RNC (SRNC) (SRNC relocation), CELL UPDATE, URA UPDATE messages as well as MEASUREMENT REPORT message in case of state transition to CELL_FACH without CELL UPDATE. The UE includes the indication in one of these messages at every transition to RRC Connected mode even though the logging period has not ended, upon connection to RAT which configured the UE to perform Logged MDT measurements and RPLMN which is equal to a PLMN in the MDT PLMN list. The indicator shall be also provided in the *UEInformationResponse* message during MDT report retrieval in case the UE has not transferred the total log in one RRC message in order to indicate the remaining data availability.

The UE will not indicate the availability of MDT measurements in another RAT or in a PLMN that is not in the MDT PLMN list.

The network may decide to retrieve the logged measurements based on this indication. In case logged MDT measurements are retrieved before the completion of the pre-defined logging duration, the reported measurement results are deleted, but MDT measurement logging will continue according to ongoing logged measurement configuration. In case the network does not retrieve logged MDT measurements, UE should store non-retrieved measurements for 48 hours from the moment the duration timer for logging expired. There is no requirement to store non-retrieved data beyond 48 hours. In addition, all logged measurement configuration and the log shall be removed by the UE at switch off or detach.

For Logged MDT the measurement reporting is triggered by an on-demand mechanism, i.e. the UE is asked by the network to send the collected measurement logs via RRC signaling. UE Information procedure is used to request UE to send the collected measurement logs. The reporting may occur in different cells than which the logged measurement configuration is signaled.

Transport of logged MDT reports in multiple RRC messages is supported. With every request, the network may receive a part of the total UE log. To indicate the reported data is a segment, the UE shall include data availability indicator. In multiple RRC transmissions for segmented logged MDT reporting, first-in first out (FIFO) order is followed, i.e. the UE should provide oldest available measurement entries in earliest message. There is no requirement specified on the size of particular reporting parts. However, each reported part should be "self-decodable", i.e. interpretable even in case all the other parts are not available.

The UE shall send an empty report when retrieval is attempted and the RPLMN is not in the MDT PLMN list.

The logged measurement report consists of measurement results for the serving cell (the measurement quantity), available UE measurements performed in idle for intra-frequency/inter-frequency/inter-RAT, time stamp and location information.

The number of neighboring cells to be logged is limited by a fixed upper limit per frequency for each category below. The UE should log the measurement results for the neighboring cells, if available, up to:
- 6 for intra-frequency neighboring cells
- 3 for inter-frequency neighboring cells
- 3 for GERAN neighboring cells
- 3 for UTRAN (if non-serving) neighboring cells
- 3 for E-UTRAN (if non-serving) neighboring cells
- 3 for CDMA2000 (if serving is E-UTRA) neighboring cells

The measurement reports for neighbor cells consist of:
- Physical cell identity of the logged cell
- Carrier frequency
- RSRP and RSRQ for EUTRA
- RSCP and Ec/No for UTRA,
- P-CCPCH RSCP for UTRA 1.28 TDD,and
- Rxlev for GERAN
- Pilot Pn phase and pilot strength for CDMA2000

For any logged cell (serving or neighbor), latest available measurement result made for cell reselection purposes is included in the log only if it has not already been reported.

While logging neighbor cells measurements, the UE shall determine a fixed number of best cells based on the measurement quantity used for ranking during cell reselection per frequency or RAT.

The measurement report is self contained, i.e. the RAN node is able to interpret the logged MDT reporting results even if it does not have access to the logged measurement configuration. Each measurement report also contains the necessary parameters for the network to be able to route the reports to the correct TCE and for OAM to identify what is reported. The parameters are sent to the UE in the logged configuration message.

For each MDT measurement the UE includes a relative time stamp. The base unit for time information in the logged MDT reports is the second. In the log, the time stamp indicates the point in time when periodic logging timer expires. The time stamp is counted in seconds from the moment the logged measurement configuration is received at the UE, relative to the absolute time stamp received within the configuration. The absolute time stamp is the current network time at the point when logged MDT is configured to the UE. The UE echoes back this absolute reference time.

Location information is based on available location information in the UE. Thus, the logged MDT measurements are tagged by the UE with location data in the following manner:
- E-UTRAN cell global identity (ECGI) or Cell-Id of the serving cell when the measurement was taken is always included in E-UTRAN or UTRAN respectively
- Detailed location information (e.g., global navigation satellite system (GNSS) location information) is included if available in the UE when the measurement was taken. If detailed location information is available the reporting shall consist of latitude and longitude. Depending on availability, altitude, uncertainty and confidence may be also additionally included. The UE tags available detailed location information only once with upcoming measurement sample, and then the detailed location information is discarded, i.e. the validity of detailed location information is implicitly assumed to be one logging interval.

Depending on location information, measurement log/report consists of:
- time information, RF measurements, RF fingerprints, or
- time information, RF measurements, detailed location information (e.g. GNSS location information)

Immediate MDT procedures are described. For Immediate MDT, RAN measurements and UE measurements can be configured. The configuration for UE measurements is based on the existing RRC measurement procedures for configuration and reporting with some extensions for location information. If area scope is included in the MDT configuration provided to the RAN, the UE is configured with respective measurement when the UE is connected to a cell that is part of the configured area scope.

For Immediate MDT, the UE provides detailed location information (e.g. GNSS location information) if available. The UE also provides available neighbor cell measurement information that may be used to determine the UE location (RF fingerprint). ECGI or Cell-Id of the serving cell when the measurement was taken is always assumed known in E-UTRAN or UTRAN respectively.

The location information which comes with UE radio measurements for MDT can be correlated with other MDT measurements, e.g. RAN measurements. For MDT measurements where UE location information is provided separately, it is assumed that the correlation of location information and MDT measurements should be done in the TCE based on time-stamps.

Multimedia broadcast multicast services (MBMS) are described. It may be referred to Section 15 of 3GPP TS 36.300 V11.7.0 (2013-09) and Section 5.8 of 3GPP TS 36.331 V11.5.0 (2013-09).

FIG. 7 shows MBMS definitions. For MBMS, the following definitions may be introduced.
- Multicast-broadcast single-frequency network (MBSFN) synchronization area: This is an area of the network where all eNBs can be synchronized and perform MBSFN transmissions. MBSFN synchronization areas are capable of supporting one or more MBSFN areas. On a given frequency layer, an eNB can only belong to one MBSFN synchronization area. MBSFN synchronization areas are independent from the definition of MBMS service areas.
- MBSFN transmission or a transmission in MBSFN mode: This is a simulcast transmission technique realized by transmission of identical waveforms at the same time from multiple cells. An MBSFN transmission from multiple cells within the MBSFN area is seen as a single transmission by a UE.
- MBSFN area: an MBSFN area consists of a group of cells within an MBSFN synchronization area of a network, which are coordinated to achieve an MBSFN transmission. Except for the MBSFN area reserved cells, all cells within an MBSFN area contribute to the MBSFN transmission and advertise its availability. The UE may only need to consider a subset of the MBSFN areas that are configured, i.e., when it knows which MBSFN area applies for the service(s) it is interested to receive.
- MBSFN area reserved cell: This is a cell within a MBSFN area which does not contribute to the MBSFN transmission. The cell may be allowed to transmit for other services but at restricted power on the resource allocated for the MBSFN transmission.
- Synchronization sequence: Each synchronization protocol data unit (SYNC PDU) contains a time stamp which indicates the start time of the synchronization sequence. For an MBMS service, each synchronization sequence has the same duration which is configured in the broadcast and multicast service center (BM-SC) and the multi-cell/multicast coordination entity (MCE).
- Synchronization period: The synchronization period provides the time reference for the indication of the start time of each synchronization sequence. The time stamp which is provided in each SYNC PDU is a relative value which refers to the start time of the synchronization period. The duration of the synchronization period is configurable.

In E-UTRAN, MBMS can be provided with single frequency network mode of operation (MBSFN) only on a frequency layer shared with non-MBMS services (set of cells supporting both unicast and MBMS transmissions, i.e., set of "MBMS/ Unicast-mixed cells"). MBMS reception is possible for UEs in RRC_CONNECTED or RRC_IDLE states. Whenever receiving MBMS services, a user shall be notified of an incoming call, and originating calls shall be possible. Robust header compression (ROHC) is not supported for MBMS. Relay nodes (RNs) do not support MBMS.

Multi-cell transmission of MBMS is characterized by:
- Synchronous transmission of MBMS within its MBSFN area;
- Combining of MBMS transmission from multiple cells is supported;
- Scheduling of each MCH is done by the MCE;
- A single transmission is used for MCH (i.e. neither blind HARQ repetitions nor RLC quick repeat);
- A single transport block (TB) is used per TTI for MCH transmission, that TB uses all the MBSFN resources in that subframe;
- MTCH and MCCH can be multiplexed on the same MCH and are mapped on MCH for point-to-multipoint (PTM) transmission;
- MTCH and MCCH use the RLC unacknowledged mode (UM);
- The MAC subheader indicates the logical channel ID (LCID) for MTCH and MCCH;
- The MBSFN synchronization area, the MBSFN area, and the MBSFN cells are semi-statically configured, e.g. by O&M;
- MBSFN areas are static, unless changed by O&M (i.e. no dynamic change of areas);

Multiple MBMS services can be mapped to the same MCH and one MCH contains data belonging to only one MBSFN area. An MBSFN area contains one or more MCHs. An MCH specific MCS is used for all subframes of the MCH that do not use the MCS indicated in BCCH. All MCHs have the same coverage area.

For MCCH and MTCH, the UE shall not perform RLC re-establishment at cell change between cells of the same MBSFN area. Within the MBSFN subframes, all MCHs within the same MBSFN area occupy a pattern of subframes, not necessarily adjacent in time, which is common for all these MCHs and is therefore called the common subframe allocation (CSA) pattern. The CSA pattern is periodically repeated with the CSA period. The actual MCH subframe allocation (MSA) for every MCH carrying MTCH is defined by the CSA pattern, the CSA period, and the MSA end, that are all signaled on MCCH. The MSA end indicates the last subframe of the MCH within the CSA period. Consequently, the MCHs are time multiplexed within the CSA period, which finally defines the interleaving degree between the MCHs. It shall be possible for MCHs to not use all MBSFN resources signaled as part of the Rel-8 MBSFN signaling. Further, such MBSFN resource can be shared for more than one purpose (MBMS, positioning, etc.). During one MCH scheduling period (MSP), which is configurable per MCH, the eNB applies MAC multiplexing of different MTCHs and optionally MCCH to be transmitted on this MCH.

MCH scheduling information (MSI) is provided per MCH to indicate which subframes are used by each MTCH during the MSP. The following principles are used for the MSI:
- it is used both when services are multiplexed onto the MCH and when only a single service is transmitted on the MCH;
- it is generated by the eNB and provided once at the beginning of the MSP;
- it has higher scheduling priority than the MCCH and, when needed, it appears first in the PDU;
- it allows the receiver to determine what subframes are used by every MTCH, sessions are scheduled in the order in which they are included in the MCCH session list;
- it is carried in a MAC control element which cannot be segmented;
- it carries the mapping of MTCHs to the subframes of the associated MSP. This mapping is based on the indexing of subframes belonging to one MSP.

The content synchronization for multi-cell transmission is provided by the following principles:
1. All eNBs in a given MBSFN synchronization area have a synchronized radio frame timing such that the radio frames are transmitted at the same time and have the same SFN.
2. All eNBs have the same configuration of RLC/MAC/PHY for each MBMS service, and identical information (e.g. time information, transmission order/priority information) such that synchronized MCH scheduling in the eNBs is ensured. These are indicated in advance by the MCE.
3. An enhanced MBMS (E-MBMS) gateway (GW) sends/broadcasts MBMS packet with the SYNC protocol to each eNB transmitting the service.
4. The SYNC protocol provides additional information so that the eNBs identify the transmission radio frame(s). The E-MBMS GW does not need accurate knowledge of radio resource allocation in terms of exact time division (e.g. exact start time of the radio frame transmission).
5. The eNB buffers MBMS packet and waits for the transmission timing indicated in the SYNC protocol.
6. The segmentation/concatenation is needed for MBMS packets and should be totally up to the RLC/MAC layer in eNB.
7. The SYNC protocol provides means to detect packet loss(es) and supports a recovery mechanism robust against loss of consecutive PDU packets (MBMS packets with SYNC header).
8. For the packet loss case the transmission of radio blocks potentially impacted by the lost packet should be muted.
9. The mechanism supports indication or detection of MBMS data burst termination (e.g. to identify and alternately use available spare resources related to pauses in the MBMS PDU data flow).
10. If two or more consecutive SYNC service data units (SDUs) within a SYNC bearer are not received by the eNB, or if no SYNC PDUs of Type 0 or 3 are received for some synchronization sequence, the eNB may mute the exact subframes impacted by lost SYNC PDUs using information provided by SYNC protocol. If not muting only those exact subframes, the eNB stops transmitting the associated MCH from the subframe corresponding to the consecutive losses until the end of the corresponding MSP and it does not transmit in the subframe corresponding to the MSI of that MSP.
11. The eNB sets VT(US) to zero in the RLC UM entity corresponding to an MCCH at its modification period boundary.
12. The eNB sets VT(US) to zero in each RLC UM entity corresponding to an MTCH at the beginning of its MSP.
13. The eNB sets every bit in the MAC padding on MCH to "0".
14. The eNB's RLC concatenates as many RLC SDUs from the same radio bearer as possible.
15. The eNB's MAC multiplexes as many RLC PDUs as fit in the transport block.

The following principles govern the MCCH structure:
- One MBSFN area is associated with one MCCH and one MCCH corresponds to one MBSFN area;
- The MCCH is sent on MCH;
- MCCH consists of a single MBSFN area configuration RRC message which lists all the MBMS services with ongoing sessions and an optional MBMS counting request message;
- MCCH is transmitted by all cells within an MBSFN area, except the MBSFN area reserved cells;
- MCCH is transmitted by RRC every MCCH repetition period;
- MCCH uses a modification period;
- A notification mechanism is used to announce changes of MCCH due to either session start or the presence of an MBMS counting request message: The notification is sent periodically throughout the modification period preceding the change of MCCH, in MBSFN subframes configured for notification. The downlink control information (DCI) format 1C with MBMS radio network temporary identity (M-RNTI) is used for notification and includes an 8-bit bitmap to indicate the one or more MBSFN area(s) in which the MCCH change(s). The UE monitors more than one notification subframe per modification period. When the UE receives a notification, it acquires the MCCH at the next modification period boundary;
- The UE detects changes to MCCH which are not announced by the notification mechanism by MCCH monitoring at the modification period.

In general, the control information relevant only for UEs supporting MBMS is separated as much as possible from unicast control information. Most of the MBMS control information is provided on a logical channel specific for MBMS common control information: the MCCH. E-UTRA employs one MCCH logical channel per MBSFN area. In case the network configures multiple MBSFN areas, the UE acquires the MBMS control information from the MCCHs that are configured to identify if services it is interested to receive are ongoing. An MBMS capable UE may be only required to support reception of a single MBMS service at a time. The MCCH carries the MBSFNAreaConfiguration message, which indicates the MBMS sessions that are ongoing as well as the (corresponding) radio resource configuration. The MCCH may also carry the MBMSCountingRequest message, when E-UTRAN wishes to count the number of UEs in RRC_CONNECTED that are receiving or interested to receive one or more specific MBMS services.

A limited amount of MBMS control information is provided on the BCCH. This primarily concerns the information needed to acquire the MCCH(s). This information is carried by means of a single MBMS specific SystemInformationBlock: SystemInformationBlockType13. An MBSFN area is identified solely by the mbsfn-AreaId in SystemInformationBlockType13. At mobility, the UE considers that the MBSFN area is continuous when the source cell and the target cell broadcast the same value in the mbsfn-AreaId.

The MCCH information is transmitted periodically, using a configurable repetition period. Scheduling information is not provided for MCCH, i.e. both the time domain scheduling as well as the lower layer configuration are semi-statically configured, as defined within SystemInformationBlockType13.

For MBMS user data, which is carried by the MTCH logical channel, E-UTRAN periodically provides MSI at lower layers (MAC). This MCH information only concerns the time domain scheduling, i.e. the frequency domain scheduling and the lower layer configuration are semi-statically configured. The periodicity of the MSI is configurable and defined by the MCH scheduling period.

Change of MCCH information only occurs at specific radio frames, i.e. the concept of a modification period is used. Within a modification period, the same MCCH information may be transmitted a number of times, as defined by its scheduling (which is based on a repetition period). The modification period boundaries are defined by system frame number (SFN) values for which SFN mod m=0, where m is the number of radio frames comprising the modification period. The modification period is configured by means of SystemInformationBlockType13.

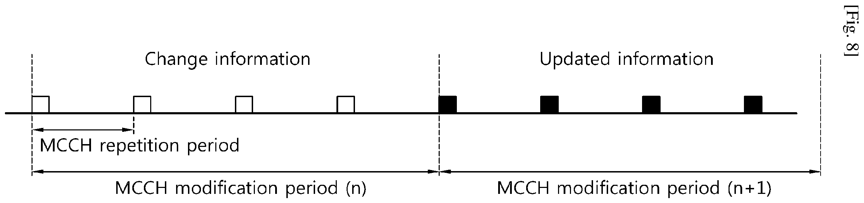

FIG. 8 shows change of MCCH information. When the network changes (some of) the MCCH information, it notifies the UEs about the change during a first modification period. In the next modification period, the network transmits the updated MCCH information. In FIG. 8, different colors indicate different MCCH information. Upon receiving a change notification, a UE interested to receive MBMS services acquires the new MCCH information immediately from the start of the next modification period. The UE applies the previously acquired MCCH information until the UE acquires the new MCCH information.

Indication of an MBMS specific RNTI, the M-RNTI, on PDCCH is used to inform UEs in RRC_IDLE and UEs in RRC_CONNECTED about an MCCH information change. When receiving an MCCH information change notification, the UE knows that the MCCH information will change at the next modification period boundary. The notification on PDCCH indicates which of the MCCHs will change, which is done by means of an 8-bit bitmap. Within this bitmap, the bit at the position indicated by the field notificationIndicator is used to indicate changes for that MBSFN area: if the bit is set to "1", the corresponding MCCH will change. No further details are provided, e.g. regarding which MCCH information will change. The MCCH information change notification is used to inform the UE about a change of MCCH information upon session start or about the start of MBMS counting.

The MCCH information change notifications on PDCCH are transmitted periodically and are carried on MBSFN subframes only. These MCCH information change notification occasions are common for all MCCHs that are configured, and configurable by parameters included in SystemInformationBlockType13: a repetition coefficient, a radio frame offset and a subframe index. These common notification occasions are based on the MCCH with the shortest modification period.

A UE that is receiving an MBMS service shall acquire the MCCH information from the start of each modification period. A UE that is not receiving an MBMS service, as well as UEs that are receiving an MBMS service but potentially interested to receive other services not started yet in another MBSFN area, shall verify that the stored MCCH information remains valid by attempting to find the MCCH information change notification at least notificationRepetitionCoeff times during the modification period of the applicable MCCH(s), if no MCCH information change notification is received.

The UE applies the MCCH information acquisition procedure to acquire the MBMS control information that is broadcasted by the E-UTRAN. The procedure applies to MBMS capable UEs that are in RRC_IDLE or in RRC_CONNECTED.

A UE interested to receive MBMS services shall apply the MCCH information acquisition procedure upon entering the corresponding MBSFN area (e.g. upon power on, following UE mobility) and upon receiving a notification that the MCCH information has changed. A UE that is receiving an MBMS service shall apply the MCCH information acquisition procedure to acquire the MCCH, which corresponds with the service that is being received, at the start of each modification period.

Unless explicitly stated otherwise in the procedural specification, the MCCH information acquisition procedure overwrites any stored MCCH information, i.e. delta configuration is not applicable for MCCH information and the UE discontinues using a field if it is absent in MCCH information unless explicitly specified otherwise.

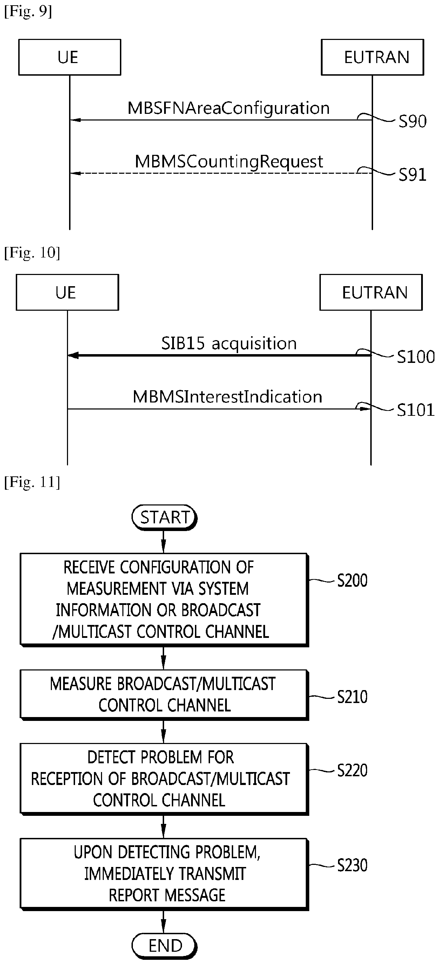

FIG. 9 shows a MCCH information acquisition procedure. An MBMS capable UE shall:
1> if the procedure is triggered by an MCCH information change notification:
   2> start acquiring the MBSFNAreaConfiguration message (in step S90) and the *MBMSCountingRequest* message if present (in step S91), from the beginning of the modification period following the one in which the change notification was received;
   1> if the UE enters an MBSFN area:
      2> acquire the *MBSFNAreaConfiguration* message (in step S90) and the *MBMSCountingRequest* message if present (in step S91), at the next repetition period;
      1> if the UE is receiving an MBMS service:
         2> start acquiring the *MBSFNAreaConfiguration* message (in step S90) and the *MBMSCountingRequest* message if present (in step S91), that both concern the MBSFN area of the service that is being received, from the beginning of each modification period;

The MBMS PTM radio bearer configuration procedure is used by the UE to configure RLC, MAC and the physical layer upon starting and/or stopping to receive an MRB. The procedure applies to UEs interested to receive one or more MBMS services. The UE applies the MRB establishment procedure to start receiving a session of a service it has an interest in. The procedure may be initiated, e.g. upon start of the MBMS session, upon (re-)entry of the corresponding MBSFN service area, upon becoming interested in the MBMS service, upon removal of UE capability limitations inhibiting reception of the concerned service. The UE applies the MRB release procedure to stop receiving a session. The procedure may be initiated, e.g. upon stop of the MBMS session, upon leaving the corresponding MBSFN service area, upon losing interest in the MBMS service, when capability limitations start inhibiting reception of the concerned service.

The purpose of MBMS interest indication is to inform the E-UTRAN that the UE is receiving or is interested to receive MBMS via an MBMS radio bearer (MRB), and if so, to inform the E-UTRAN about the priority of MBMS versus unicast reception.

FIG. 10 shows an MBMS interest indication procedure. An MBMS capable UE in RRC_CONNECTED may initiate the procedure in several cases including upon successful connection establishment, upon entering or leaving the service area, upon session start or stop, upon change of interest, upon change of priority between MBMS reception and unicast reception or upon change to a primary cell (PCell) broadcasting *SystemInformationBlockType15.*

Upon initiating the procedure, the UE shall:
1> if *SystemInformationBlockType15* is broadcast by the PCell; and has been acquired by the UE (in step S100):
   2> if the UE did not transmit an *MBMSInterestIndication* message since last entering RRC_CONNECTED state; or
   2> if since the last time the UE transmitted an *MBMSInterestIndication* message, the UE connected to a PCell not broadcasting *SystemInformationBlockType15:*
      3> if the set of MBMS frequencies of interest is not empty:
         4> initiate the transmission of the *MBMSInterestIndication* message (in step S101);
         2> else:
         3> if the set of MBMS frequencies of interest has changed since the last transmission of the *MBMSInterestIndication* message; or
         3> if the prioritization of reception of all indicated MBMS frequencies compared to reception of any of the established unicast bearers has changed since the last transmission of the *MBMSInterestIndication* message:
            4> initiate the transmission of the *MBMSInterestIndication* message (in step S101);

To determine MBMS frequencies of interest, the UE shall:
1> consider a frequency to be part of the MBMS frequencies of interest if the following conditions are met:
   2> if at least one MBMS session the UE is receiving or interested to receive via an MRB is ongoing or about to start; and
   2> if for at least one of these MBMS sessions *SystemInformationBlockType15* acquired from the PCell includes for the concerned frequency one or more MBMS SAIs as indicated in the USD for this session; and
2> the UE is capable of simultaneously receiving the set of MBMS frequencies of interest, regardless of whether a serving cell is configured on each of these frequencies or not; and
2> the *supportedBandCombination* the UE included in *UE-EUTRA-Capability* contains at least one band combination including the set of MBMS frequencies of interest;

The UE shall set the contents of the *MBMSInterestIndication* message as follows:
1> if the set of MBMS frequencies of interest is not empty:
   2> include *mbms-FreqList* and set it to include the MBMS frequencies of interest;
   2> include *mbms-Priority* if the UE prioritises reception of all indicated MBMS frequencies above reception of any of the unicast bearers;

The UE shall submit the *MBMSInterestIndication* message to lower layers for transmission.

The PTM communication may include utilizing a dedicated channel or dedicated carrier to broadcast data or services to multiple users. While a certain amount of overhead may be required to initiate a PTM communication, the overhead is relatively small and may not vary in relation to the number of UEs. That is, as more UEs utilize PTM communication, the overhead required to establish and maintain PTM communication remains approximately the same. The PTM communication may also improve spectral efficiency as the number of UEs increases because no new transmissions are required for new added users. In some cases, PTM communication is limited to a single cell, wherein communications are restricted between the eNB and one or more UEs of that cell. Such restricted communication is referred to as single cell PTM (SC-PTM) communication.

According to the prior art, it is not possible for the UE to immediately report MBMS related problem to the network. As a result, MBMS service reception quality may not be consistent over the MBMS service area, and network cannot manage/operate the MBMS service in effective and cost-efficient manner.

In order to solve the problem describe above, a method for transmitting a report message according to an embodiment of the present invention is described.

FIG. 11 shows an example of a method for transmitting a report message according to an embodiment of the present invention.

In step S200, the UE receives a configuration of measurement via system information or broadcast/multicast control channel. The broadcast/multicast control channel may be the MCCH. Hereinafter, it is assumed that the broadcast/multicast control channel is the MCCH, but the embodiment of the present invention is not limited thereto. The system information may be received from a cell on the frequency where the MBMS service is provided, from the serving cell, or from the PCell. The MCCH may be received from the frequency and the MBSFN area where the MBMS service is provided.

The configuration of measurement may be a configuration of (immediate) MBMS MDT. The configuration of measurement may determine whether or not immediate MBMS MDT is enabled by a first network. The first network may be a network providing the MBMS service. Or, the first network may be the R-PLMN or selected PLMN of the UE regardless of whether or not the first network provides the MBMS service.

The configuration of measurement may indicate at least one of the service area, the PLMN, the frequency, the MBSFN area, the physical multicast channel (PMCH), or the MTCH. The UE may perform measurements for (immediate) MBMS MDT, when the UE is receiving the MBMS service from the service area, the PLMN, the frequency, the MBSFN area, the PMCH, or the MTCH. The configuration of measurement may further indicate that the UE shall perform reporting in case that measured result is lower than threshold A for a certain period, and/or in case that measured result is higher than threshold B for a certain period. The configuration of measurement may further indicate the PLMN list, the frequency list, and or the cell list. The UE may perform reporting when R-PLMN (or selected PLMN) of the UE is in the PLMN list, or when a serving cell of the UE is on the frequency, or when a serving cell of the UE corresponds to the cell.

Further, the configuration of measurement may indicate what the UE shall report, which includes:
- measured results (e.g., block error ratio (BLER), RSRP, RSRQ, the number/size of missing RLC SDU/PDUs, throughput, traffic volumes)
- where UE detected the MBMS problem (e.g. service area, PLMN, frequency, MBSFN area, PMCH, MTCH)
- MBMS configuration related to the MBMS problem such as MCS and PMCH configuration.
- Event type (e.g. lower than threshold, or higher than threshold)

In step S210, the UE measures the broadcast/multicast control channel, i.e. the MCCH, while receiving the MBMS service (while the UE is in RRC_CONNECTED). The UE may perform measurements from MBSFN subframes where the UE is receiving the channel of the MBMS service. The UE may perform measurements from MBSFN subframes where the UE is receiving MCCH related to the MBMS service. The UE may perform measurements from MBSFN subframes where the UE is receiving MSI related to the MBMS service.

In step S220, the UE, while in RRC_CONNECTED, detects a problem for reception of a broadcast/multicast service. The problem may include at least one of the case that the measured result is lower than threshold A for a certain period, or the case that the measured result is higher than threshold B for a certain period.

In step S230, upon detecting the problem, the UE immediately transmits a report message. The UE may immediately transmit the report message to a second network if the UE is in RRC_CONNECTED and if immediate MBMS MDT is enabled by the first network. The second network may be the PLMN which the UE is registered in. The first network may be the same as the second network. The second network may be a network serving the UE. If the immediate MBMS MDT is disabled by the first network, the UE cannot transmit the report message to the second network. That is, the UE may transmit the report message to the second network, only if the second network is in the PLMN list indicated by the configuration of measurement, or only if the second network is equal to the first network (or if a serving cell of the UE is on the frequency indicated by the configuration of measurement, or if a serving cell of the UE corresponds to the cell indicated by the configuration of measurement).

The report may include:
- measured results (e.g., block error ratio (BLER), RSRP, RSRQ, the number/size of missing RLC SDU/PDUs, throughput, traffic volumes)
- where UE detected the MBMS problem (e.g. service area, PLMN, frequency, MBSFN area, PMCH, MTCH)
- MBMS configuration related to the MBMS problem such as MCS and PMCH configuration.
- Event type (e.g. lower than threshold, or higher than threshold)

The report message may be either the measurement report message or the MBMS interest indication message.

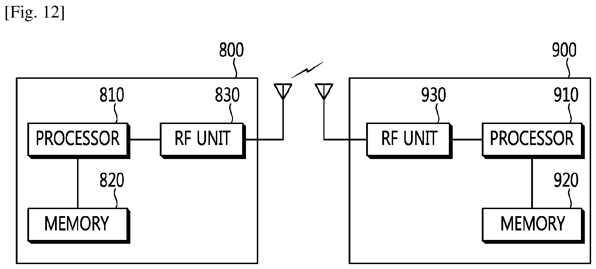

FIG. 12 shows a wireless communication system to implement an embodiment of the present invention.

An eNB 800 may include a processor 810, a memory 820 and a radio frequency (RF) unit 830. The processor 810 may be configured to implement proposed functions, procedures and/or methods described in this description. Layers of the radio interface protocol may be implemented in the processor 810. The memory 820 is operatively coupled with the processor 810 and stores a variety of information to operate the processor 810. The RF unit 830 is operatively coupled with the processor 810, and transmits and/or receives a radio signal.

A UE 900 may include a processor 910, a memory 920 and a RF unit 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The RF unit 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The RF units 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method for transmitting, by a user equipment, UE, a report message in a wireless communication system, the method comprising:
receiving (S200), by the UE, a configuration of immediate minimization of drive tests, MDT, indicating a multicast traffic channel, MTCH, via system information or multicast control channel, MCCH,
wherein the MTCH indicated by the configuration is used for determining whether or not the immediate MDT for a multimedia broadcast multicast service, MBMS, service is enabled by a first network, and
wherein the first network is a network providing the MBMS service;
receiving (S210), by the UE, the MBMS service from the MTCH indicated by the configuration;
if the MBMS service is received from the MTCH indicated by the configuration, determining that the immediate MDT for the MBMS service is enabled by the first network;
detecting (S220), by the UE, a problem for reception of the MBMS service; and
upon detecting the problem, immediately transmitting (S230), by the UE, a report message.

2. The method of claim 1, wherein the configuration of immediate MDT further indicating a service area, and
wherein the service area indicated by the configuration is used for determining that the immediate MDT for the MBMS service is enabled by the first network.

3. The method of claim 1, wherein the configuration of immediate MDT further indicating a public land mobile network, PLMN, and
wherein the PLMN indicated by the configuration is used for determining that the immediate MDT for the MBMS service is enabled by the first network.

4. The method of claim 1, wherein the configuration of immediate MDT further indicating a frequency, and
wherein the frequency indicated by the configuration is used for determining that the immediate MDT for the MBMS service is enabled by the first network.

5. The method of claim 1, wherein the report message is one of a measurement report message or a MBMS interest indication message.

6. The method of claim 1, wherein the configuration of immediate MDT further indicating a multicast-broadcast single-frequency network, MBSFN, area, and
wherein the MBSFN area indicated by the configuration is used for determining that the immediate MDT for the MBMS service is enabled by the first network.

7. The method of claim 1, wherein the configuration of immediate MDT indicates at least one of a PLMN list, a frequency list, or a cell list.

8. The method of claim 1, wherein problem includes at least one of a case that a measurement result is lower than a first threshold for a certain period or a case that the measurement result is higher than a second threshold for a certain period.

9. The method of claim 1, wherein the report message includes at least one of a measurement result, where the UE detects the problem, a configuration related to the problem, or an event type.

10. The method of claim 1, wherein the configuration of immediate MDT further indicating a physical multicast channel, PMCH, and
wherein the PMCH indicated by the configuration is used for determining that the immediate MDT for the MBMS service is enabled by the first network.

11. The method of claim 1, wherein the report message is transmitted to a second network if the immediate MDT for the MBMS service is enabled by the first network.

12. The method of claim 11, wherein the second network is a PLMN in which the UE is registered.

13. The method of claim 11, wherein the first network and the second network are same.

14. A user equipment, UE, (900) configured to transmit a report message in a wireless communication system, the UE comprising:
a radio frequency, RF, unit (930) configured to transmit or receive a radio signal; and
a processor (910) coupled to the RF unit (930), and configured to:
receive a configuration of immediate minimization of drive tests, MDT, indicating a multicast traffic channel, MTCH, via system information or multicast control channel, MCCH,
wherein the MTCH indicated by the configuration is used for determining whether or not the immediate MDT for a multimedia broadcast multicast service, MBMS, service is enabled by a first network, and
wherein the first network is a network providing the MBMS service;
receive the MBMS service from the MTCH indicated by the configuration;
if the MBMS service is received from the MTCH indicated by the configuration, determining that the immediate MDT for the MBMS service is enabled by the first network;
detect a problem for reception of the MBMS service; and
upon detecting the problem, immediately transmit a report message.

## Patentansprüche

1. Verfahren zum Senden - durch ein Benutzergerät (UE) - einer Berichtsnachricht in einem Drahtloskommunikationssystem, wobei das Verfahren umfasst:
Empfangen (S200) - durch das Benutzergerät - einer Konfiguration von Sofort-Minimierung von Drive-Tests (MDT), die einen Multicast-Verkehrskanal (MTCH; Multicast Traffic Channel) angibt, und zwar über Systeminformationen oder einen Multicast-Steuerkanal (MCCH),
wobei der durch die Konfiguration angegebene MTCH zur Bestimmung dient, ob die Sofort-MDT für einen Multimedia-Broadcast-Multicast-Service (MBMS)-Dienst durch ein erstes Netzwerk aktiviert ist oder nicht, und
wobei das erste Netzwerk ein Netzwerk ist, das den MBMS-Dienst bereitstellt;
Empfangen (S210) - durch das Benutzergerät - des MBMS-Dienstes vom durch die Konfiguration angegebenen MTCH;
wenn der MBMS-Dienst vom von der Konfiguration angegebenen MTCH empfangen wird: Bestimmen, dass die Sofort-MDT für den MBMS-Dienst durch das erste Netzwerk aktiviert ist;
Erfassen (S220) - durch das Benutzergerät - eines Problems für den Empfang des MBMS-Dienstes; und nach Erfassen des Problems: sofortiges Senden (S230) einer Berichtsnachricht durch das Benutzergerät.

2. Verfahren nach Anspruch 1, wobei die Konfiguration von Sofort-MDT weiterhin einen Dienstbereich angibt, und
wobei der durch die Konfiguration angegebene Dienstbereich zur Bestimmung dient, dass die Sofort-MDT für den MBMS-Dienst durch das erste Netzwerk aktiviert ist.

3. Verfahren nach Anspruch 1, wobei die Konfiguration von Sofort-MDT weiterhin ein PLMN (öffentliches terrestrisches Mobilfunknetz) angibt und
wobei das durch die Konfiguration angegebene PLMN zur Bestimmung dient, dass die Sofort-MDT für den MBMS-Dienst durch das erste Netzwerk aktiviert ist.

4. Verfahren nach Anspruch 1, wobei die Konfiguration von Sofort-MDT weiterhin eine Frequenz angibt, und
wobei die von der Konfiguration angegebene Frequenz zur Bestimmung dient, dass die Sofort-MDT für den MBMS-Dienst durch das erste Netzwerk aktiviert ist.

5. Verfahren nach Anspruch 1, wobei die Berichtsnachricht entweder eine Messberichtsnachricht oder eine MBMS-Interessenbekundungsnachricht ist.

6. Verfahren nach Anspruch 1, wobei die Konfiguration von Sofort-MDT weiterhin einen MBSFN-Bereich (Multicast-Broadcast-Einfrequenznetz) angibt, und
wobei der durch die Konfiguration angegebene MBSFN-Bereich zur Bestimmung dient, dass die Sofort-MDT für den MBMS-Dienst durch das erste Netzwerk aktiviert ist.

7. Verfahren nach Anspruch 1, wobei die Konfiguration von Sofort-MDT mindestens eine von einer PLMN-Liste, einer Frequenzliste oder eine Zellenliste angibt.

8. Verfahren nach Anspruch 1, wobei der Problem mindestens einen des Falls, dass ein Messergebnis geringer ist als ein erster Schwellwert für eine bestimmte Zeitspanne, und des Falls, dass das Messergebnis höher ist als ein zweiter Schwellwert für eine bestimmte Zeitspanne, einschließt.

9. Verfahren nach Anspruch 1, wobei die Berichtsmeldung mindestens eines aus einem Messergebnis, wo das Benutzergerät das Problem erfasst, einer Konfiguration bezüglich des Problems oder einem Ereignistyp einschließt.

10. Verfahren nach Anspruch 1, wobei die Konfiguration der Sofort-MDT weiterhin einen PMCH (physischer Multicast-Kanal) angibt, und
wobei der von der Konfiguration angegebene PMCH zur Bestimmung dient, dass die Sofort-MDT für den MBMS-Dienst durch das erste Netzwerk aktiviert ist.

11. Verfahren nach Anspruch 1, wobei die Berichtsmeldung an ein zweites Netzwerk gesendet wird, wenn die Sofort-MDT für den MBMS-Dienst durch das erste Netzwerk aktiviert ist.

12. Verfahren nach Anspruch 11, wobei das zweite Netzwerk ein PLMN ist, bei dem das Benutzergerät angemeldet ist.

13. Verfahren nach Anspruch 11, wobei das erste Netzwerk und das zweite Netzwerk gleich sind.

14. Benutzergerät (900), das zum Senden einer Berichtsmeldung in einem Drahtloskommunikationssystem eingerichtet ist, wobei das Benutzergerät umfasst:
eine Hochfrequenzeinheit (930), die zum Senden oder Empfangen eines Funksignals ausgelegt ist; und
einen Prozessor (910), der mit der Hochfrequenzeinheit (930) gekoppelt und konfiguriert ist zum:
Empfangen einer Konfiguration von Sofort-Minimierung von Drive-Tests (MDT), die einen MTCH (Multicast Traffic Channel; Multicastverkehrskanal) angibt, und zwar über Systeminformationen oder einen Multicast-Steuerkanal (MCCH),
wobei der durch die Konfiguration angegebene MTCH zur Bestimmung dient, ob die Sofort-MDT für einen MBMS-Dienst durch ein erstes Netzwerk aktiviert ist oder nicht, und
wobei das erste Netzwerk ein Netzwerk ist, das den MBMS-Dienst bereitstellt;
Empfangen des MBMS-Dienstes vom durch die Konfiguration angegebenen MTCH;
wenn der MBMS-Dienst vom durch die Konfiguration angegebenen MTCH empfangen wird: Bestimmen, dass die Sofort-MDT für den MBMS-Dienst durch das erste Netzwerk aktiviert ist;
Erfassen eines Problems für den Empfang des MBMS-Dienstes; und
nach Erfassen des Problems: sofortiges Senden einer Berichtsnachricht.

## Revendications

1. Procédé pour transmettre, par un équipement utilisateur, UE, un message de rapport dans un système de communication sans fil, le procédé comprenant :
recevoir (S200), par l'UE, une configuration de minimisation d'essais de conduite, MDT, immédiate indiquant un canal de trafic de multidiffusion, MTCH, par l'intermédiaire d'informations de système ou un canal de commande de multidiffusion, MCCH,
le MTCH indiqué par la configuration étant utilisé pour déterminer si la MDT immédiate pour un service de diffusion/multidiffusion multimédia, MBMS, est ou non activée par un premier réseau, et
le premier réseau étant un réseau fournissant le service MBMS ;
recevoir (S210), par l'UE, le service MBMS à partir du MTCH indiqué par la configuration ;
si le service MBMS est reçu à partir du MTCH indiqué par la configuration, déterminer que la MDT immédiate pour le service MBMS est activée par le premier réseau ;
détecter (S220), par l'UE, un problème de réception du service MBMS ; et
lors de la détection du problème, transmettre immédiatement (S230), par l'UE, un message de rapport.

2. Procédé selon la revendication 1, dans lequel la configuration de MDT immédiate indique en outre une zone de service, et
dans lequel la zone de service indiquée par la configuration est utilisée pour déterminer que la MDT immédiate pour le service MBMS est activée par le premier réseau.

3. Procédé selon la revendication 1, dans lequel la configuration de MDT immédiate indique en outre un réseau mobile terrestre public, PLMN, et
dans lequel le PLMN indiqué par la configuration est utilisé pour déterminer que la MDT immédiate pour le service MBMS est activée par le premier réseau.

4. Procédé selon la revendication 1, dans lequel la configuration de MDT immédiate indique en outre une fréquence, et
dans lequel la fréquence indiquée par la configuration est utilisée pour déterminer que la MDT immédiate pour le service MBMS est activée par le premier réseau.

5. Procédé selon la revendication 1, dans lequel le message de rapport est l'un parmi un message de rapport de mesure ou un message d'indication d'intérêt de MBMS.

6. Procédé selon la revendication 1, dans lequel la configuration de MDT immédiate indique en outre une zone de réseau monofréquence de diffusion/multidiffusion, MBSFN, et
dans lequel la zone de MBSFN indiquée par la configuration est utilisée pour déterminer que la MDT immédiate pour le service MBMS est activée par le premier réseau.

7. Procédé selon la revendication 1, dans lequel la configuration de MDT immédiate indique au moins l'une parmi une liste de PLMN, une liste de fréquences ou une liste de cellules.

8. Procédé selon la revendication 1, dans lequel le problème comprend au moins l'un parmi un cas dans lequel un résultat de mesure est inférieur à un premier seuil pendant une certaine période ou un cas dans lequel le résultat de mesure est supérieur à un second seuil pendant une certaine période.

9. Procédé selon la revendication 1, dans lequel le message de rapport comprend au moins l'un parmi un résultat de mesure, dans lequel l'UE détecte le problème, une configuration associée au problème ou un type d'événement.

10. Procédé selon la revendication 1, dans lequel la configuration de MDT immédiate indique en outre un canal de multidiffusion physique, PMCH, et
dans lequel le PMCH indiqué par la configuration étant utilisé pour déterminer que la MDT immédiate pour le service MBMS est activée par le premier réseau.

11. Procédé selon la revendication 1, dans lequel le message de rapport est transmis à un second réseau si la MDT immédiate pour le service MBMS est activée par le premier réseau.

12. Procédé selon la revendication 11, dans lequel le second réseau est un PLMN dans lequel l'UE est enregistré.

13. Procédé selon la revendication 11, dans lequel le premier réseau et le second réseau sont les mêmes.

14. Equipement utilisateur, UE, (900) configuré pour transmettre un message de rapport dans un système de communication sans fil, l'UE comprenant :
une unité radiofréquence, RF, (930) configurée pour émettre ou recevoir un signal radio ; et
un processeur (910) couplé à l'unité RF (930), et configuré pour :
recevoir une configuration de minimisation d'essais de conduite, MDT, immédiate indiquant un canal de trafic de multidiffusion, MTCH, par l'intermédiaire d'informations de système ou un canal de commande de multidiffusion, MCCH,
le MTCH indiqué par la configuration étant utilisé pour déterminer si la MDT immédiate pour un service de diffusion/multidiffusion multimédia, MBMS, est ou non activée par un premier réseau, et
le premier réseau étant un réseau fournissant le service MBMS ;
recevoir le service MBMS à partir du MTCH indiqué par la configuration ;
si le service MBMS est reçu à partir du MTCH indiqué par la configuration, déterminer que la MDT immédiate pour le service MBMS est activée par le premier réseau ;
détecter un problème de réception du service MBMS ; et
lors de la détection du problème, transmettre immédiatement un message de rapport.
